# DEMANDE DE BREVET EUROPEEN

(11) **EP 0 943 837 A2**
(43) Date de publication de la demande: **22.09.1999**
(21) Numéro de dépôt: 98500142.9
(22) Date de dépôt: 16.06.1998
(51) Int. Cl.: F16H 3/091

(54) **Tête de réduction pour machine-outil**

(30) Priorité: 16.03.1998 ES 9800726 U
(71) Demandeur: Benito Barragan, Angel, 20150 Billabona, (Guipuzcoa) (ES)
(72) Inventeur: Benito Barragan, Angel, 20150 Billabona, (Guipuzcoa) (ES)
(74) Mandataire: Urizar Barandiaran, Miguel Angel

(57) **Abrégé**

Tête de réduction perfectionnée, pour machine-outil, sur laquelle il est possible d'établir, au moins, deux vitesses de travail sans besoin d'interférence ou d'interruption de la machine sur laquelle s'applique ladite tête. Elle se compose d'un pignon moteur (2), monté sur l'axe de sortie (e₁) du moteur; d'un train d'engrenages comprenant un premier pignon (3) parfaitement engrené avec le pignon moteur et un dernier pignon (5) qui tourne de manière permanente à vitesse réduite; d'un engrenage de changement (6) susceptible d'adopter, au moins, deux positions d'opération; des moyens d'accouplement/désaccouplement entre les dits engrenage de changement et le dernier pignon du train d'engrenage pour transmettre, respectivement, la vitesse directe et la vitesse réduite à l'axe principal (1); et des moyens sélecteurs pour disposer de manière axiale l'engrenage de changement (6) dans l'une ou l'autre de ses positions d'opérations.

S'applique, de préférence, sur machine/outil.

## Description

La présente invention traite d'une tête de réduction du type de celles, accouplées à un axe moteur avec une vitesse initiale, transmettant ce mouvement de tour à un axe de sortie à une vitesse finale différente -et généralement inférieure.

Sur les têtes de réduction conventionnelles basées sur le principe décrit, il n'est pas possible de modifier les conditions de la transmission (sur une même tête une vitesse d'entrée correspond toujours à une autre vitesse de sortie).

Sur la nouvelle tête de réduction, selon l'invention il est possible d'établir, au minimum, deux vitesses de travail sans qu'il y besoin d'interférence ou d'interruption de la machine sur laquelle s'applique ladite tête.

En principe, l'application de la tête de réduction selon l'invention est prévue pour machine-outil (en particulier machine-outil d'usinage comportant un porte-outil situé sur son axe principal), même si l'on n'écarte guère d'autres applications sans que varie pour autant l'invention dans son essence.

Pour mieux comprendre l'objet de la présente invention, on représente sur les plans une forme préférentielle de réalisation pratique, susceptible de changements accessoires qui n'en altèreront pas le fondement.

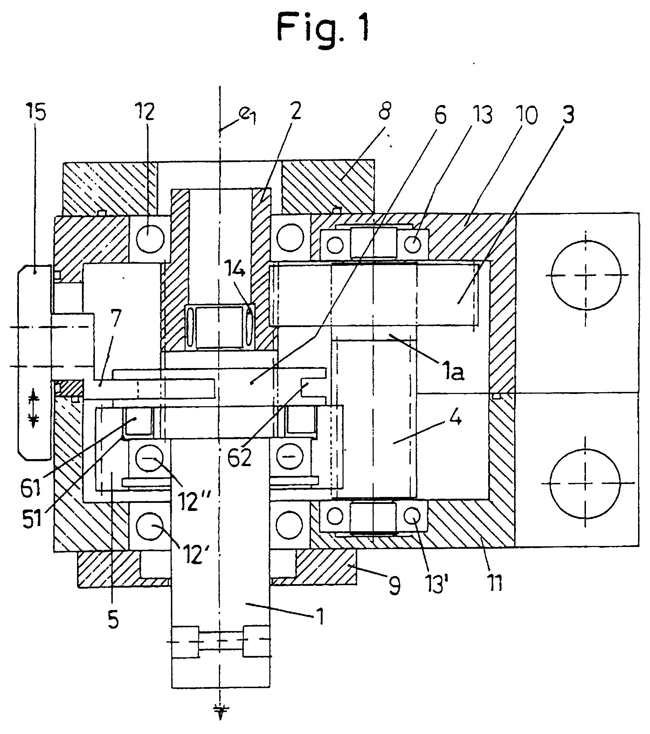

La figure 1 représente une coupe générale schématique d'une tête de réduction perfectionnée, Pour machine-outil selon l'invention, avec tous ses composants et particularités pour un exemple -non limitatif- de réalisation pratique.

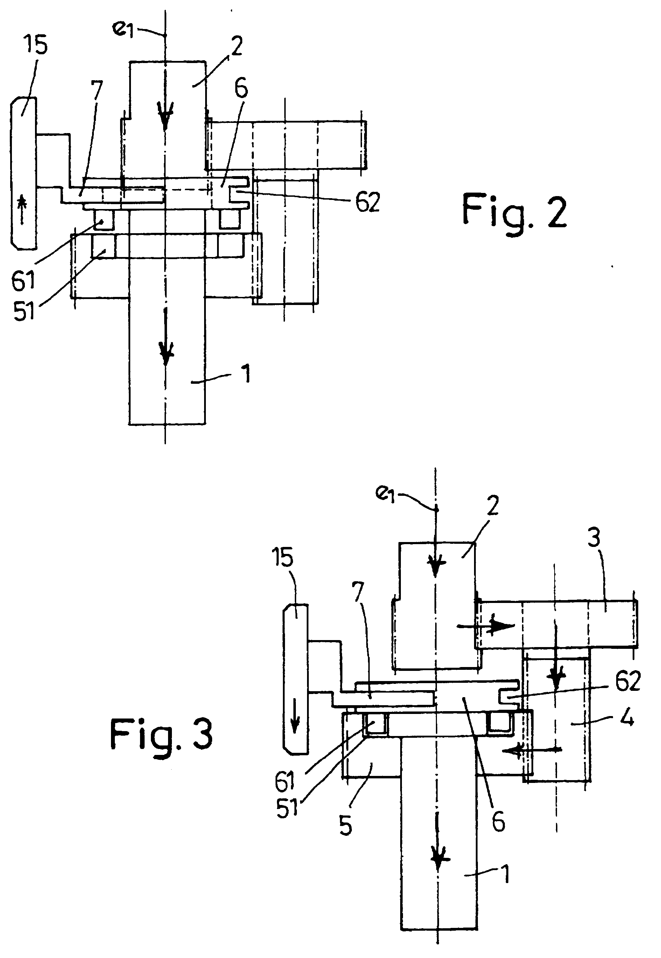

La figure 2 représente, en schéma, une transmission directe entre axe moteur (e₁) et axe principal (1).
La figure 3 représente, en schéma, une transmission réduite entre l'axe moteur (e1) et l'axe principal (1).

On trouvera décrit, ci-après, un exemple de réalisation pratique, non limitative, de la présente invention. On trouvera inclus dans l'objet de l'invention tous les changements accessoires qui pourront être introduits sans en altérer le fondement. La présente invention prend également en compte toutes ses variantes.

La présente invention traite d'une tête de réduction perfectionnée, s'appliquant de manière préférentielle en machine-outil.

La tête préconisée comprend une carcasse intégrée par plusieurs couvercles démontables (8), (9), (10) (11) qui permettent le passage d'axes d'entrée (e₁) moteur et de sortie ou axe principal (1) sur lequel est disposé, par exemple, un porte-outil.

En conformité avec l'invention, et selon la réalisation représentée, sur l'axe moteur (e₁) est disposé un pignon moteur (2) -monté sur le couvercle de la carcasse (10) avec interposition de roulement (12).

Au plan axial, on dispose l'axe principal (1) -monté sur le couvercle de la carcassse (11) et sur le pignon moteur (2) avec interposition de roulements (12'), (14).

Un train d'engrenages (3), (4), (5) monté sur les couvercles (10), (11) de la carcasse permet le mouvement à partir du pignon moteur (2), à vitesse réduite.

Les pignons (3), (4) du train d'engrenages (3), (4), (5) sont disposés sur un axe auxiliaire (1a) monté sur les couvercles (10), (11) de la carcasse avec interposition de roulements (13), (13').

L'axe principal (1) porte solidaire l'engrenage de changement (6).

L'engrenage de changement (6) comporte des moyens pour s'engrener directement sur le pignon (2) ou se verrouiller sur le dernier pignon (5) du train d'engrenages (3), (4), (5), au gré de l'utilisateur lorsque ce dernier agit sur des moyens sélecteurs appropriés.

Les moyens sélecteurs sont pour la réalisation représentée, un entraîneur interne (7) et une commande guidée (15) externe qui lui est solidaire. L'entraîneur interne (7) se loge de manière permanente dans un guide circonférentiel (62) de l'engrenage de changement (6).

Les dits moyens d'accouplement/désaccouplement entre pignon (5) et engrenage de changement (6) sont, pour la réalisation représentée, des jeux de protubérances (61) sur l'engrenage (6) qui, en fonction de leur position, se logent ou non dans des jeux de mortaises (51) dont les positions se font face.

L'engrenage de changement (6) se trouvant dans une position extrême - atteinte par l'entraîneur (7) en manipulant la commande (15), les protubérances (61) se libèrent des mortaises (51) et l'engrenage de changement (6) s'engrène sur le pignon moteur (2). Le mouvement de rotation se transmet directement depuis l'axe (e1) à travers le pignon moteur (2) et l'engrenage de changement (6) à l'axe principal (1). Le train d'engrenage (3), (4) (5) tourne librement.

L'engrenage de changement (6) se trouvant dans une autre position extrême - obtenue par l'entraîneur (7) en manipulant la commande (15) - les protubérances (61) se logent dans les mortaises (51) et l'engrenage de changement (6) - libre du pignon (2)- tourne solidaire du pignon (5). Le mouvement se transmet- réduit - à partir de l'axe (e1) à travers le pignon moteur (2) et train d'engrenages (3), (4), (5),(6) à l'axe principal (1).

Pourront être variables les matériels, dimensions, proportions et, en général, tous les autres détails accessoires ou secondaires qui n'altèreront pas, ne changeront ni ne modifieront l'invention proposée dans son essence.

## Revendications

1. Tête de réduction perfectionnée, pour machine-outil, se caractérisant par le fait de disposer, sur une carcasse démontable, de:
a) un pignon moteur (2) monté sur l'axe de sortie (e₁) du moteur, avec lequel il tourne de manière permanente et solidaire;
b) un train d'engrenages comprenant un premier pignon (3) engrené en permanence avec le pignon moteur (2) et un dernier pignon (5) qui tourne en permanence à vitesse réduite;
c) un engrenage de changement (6) disposé de manière coaxiale par rapport à l'axe principal (1) et susceptible d'adopter au moins deux positions d'opérations dans lesquelles, respectivement, il engrène sur ledit pignon-moteur (2) en transmettant à l'axe principal (1) une vitesse directe et s'accouple de manière verrouillée sur ledit dernier pignon (5) du train d'engrenages réducteur avec lequel il tourne de manière solidaire en transmettent à l'axe principal (1) une vitesse réduite;
d) des moyens d'accouplement/désaccouplement entre lesdits engrenage de changement (6) et le dernier pignon (5) pour transmettre respectivement, la vitesse directe et la vitesse réduite à l'axe principal (1);
e) des moyens sélecteur (15), (7) pour disposer de manière axiale l'engrenage de changement (6) dans l'une ou l'autre de ses positions d'opérations.

2. Tête de réduction perfectionnée, pour machine-outil, selon revendication antérieure, se caractérisant par le fait que les dits moyens d'accouplement/désaccouplement sont constitués, sur l'engrenage de changement (6) par un jeu de protubérances (61) et sur le dernier pignon (5) par un jeu de mortaises (51) qui les logent conjointement ou les libère en fonction de la position axiale de l'engrenage (6) déplacé linéairement par les moyens sélecteurs (15, 7).

3. Tête de réduction perfectionnée, Pour machine-outil, selon revendications antérieures, se caractérisant par le fait que les dits moyens sélecteurs sont constitués par une commande (15) guidée dans la carcasse du réducteur et solidaire d'un entraîneur interne, logé èn permanence dans un guide circonférentiel de l'engrenage de changement (6) qu'il déplace de manière axiale en agissant sur la commande (15).
